# EUROPÄISCHE PATENTSCHRIFT

(11) **EP 1 182 098 B1**
(45) Veröffentlichungstag und Bekanntmachung des Hinweises auf die Patenterteilung: **15.03.2006**
(21) Anmeldenummer: 01111893.2
(22) Anmeldetag: 17.05.2001
(51) Int. Cl.: B60R 21/13

(54) **Überrollschutzsystem**
Rollbar system
Système d'arceau de sécurité

(30) Priorität: 19.08.2000 DE 10040642
(43) Veröffentlichungstag der Anmeldung: 27.02.2002
(73) Patentinhaber: ISE Innomotive Systems Europe GmbH, 51702 Bergneustadt (DE)
(72) Erfinder: Nass, Michael, 51702 Bergneustadt (DE)
(74) Vertreter: Fuchs Mehler Weiss & Fritzsche

(56) Entgegenhaltungen:
- EP-A- 0 657 327
- EP-A- 0 657 328
- WO-A-97/48579
- DE-A- 4 342 400

## Beschreibung

Die Erfindung bezieht sich auf ein Überrollschutzsystem, mit
- einem fahrzeugfest anbringbaren kassettenartigen Gehäuse,
- einem im Gehäuse geführten Überrollkörper, der im Normalzustand gegen die Kraft von mindestens einer vorgespannten, von einem Rohr umgebenen Antriebs-Druckfeder durch eine Haltevorrichtung in einer unteren eingefahrenen Ruhelage haltbar ist, und unter Lösen der Haltevorrichtung durch die Federkraft der Antriebs-Druckfeder in eine obere, schützende, und dort verriegelbare Stellung bringbar ist, und
- einem Federführungsbolzen, der von der Antriebs-Druckfeder umfaßt ist.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise einen in einem Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crasbmagneten, oder durch ein pyrotechnisches Auslöseglied gebildet ist. Die Verriegelungseinrichtung besteht typischerweise aus einer schwenkbar angelenkten Rastklinke mit Zahnsegmenten und einer feststehenden Zahnleiste oder dergleichen, wobei ein Element mit dem Überrollbügel und das andere fahrzeugfest verbunden ist.

Eine derartige Kassetten-Konstruktion eines Überrollbügelschutzsystems zeigt beispielsweise die DE 43 42 440 A 1. Auch die gattungsbildende Der 197 81 833 T 1 zeigt diese Kassetten-Konstruktion.

Das vorstehende bekannte Überrollschutzsystem weist im speziellen ein Gehäuse in Form einer einseitig offenen, U-förmigen Kassette auf, mit zwei Seitenwänden, die auf der offenen Seite der Kassette jeweils einen nach außen abgekanteten Winkelbabschnitt zur fahrzeugfesten Befestigung der Kassette besitzen, an denen weiterhin ein Bodenblech befestigt ist, und die schließlich frontseitig über eine Deckwand miteinander verbunden sind. Das Überrollschutzsystem besitzt weiterhin als Überrollkörper einen U-förmigen Überrollbügel bestehend aus einem gekrümmten Abschnitt und zwei parallelen Schenkelrohren, die jeweils eine geschlossene Mantelfläche besitzen, und deren offene Enden über ein traversenartiges, versteifendes Verbindungselement miteinander verbunden sind.
Das System weist ferner zwei mit einem Ende am Gehäuseboden angebrachte, in Innern jeweils eine Antriebs-Druckfeder für den alleinigen Antrieb des Überrollbügels aufnehmende, Standrohre, die jeweils von einem Schenkelrohr koaxial umgriffen sind und ebenfalls eine geschlossene Mantelfläche aufweisen sowie einen am oberen Ende des Gehäuses flächig an den Seitenwänden der Kassette angebrachten Führungsblock auf, der Führungsöffnungen zur zusätzlichen äußeren Führung der Schenkelrohre besitzt.

Um ein Ausknicken der Antriebs-Druckfedern beim Ausfahren des Überrollbügels zu verhindern, sind, wie die EP 0 623 492 B1 zeigt, bei den vorbeschriebenen Kassetten-Konstruktionen Federführungsbolzen vorgesehen, die jeweils von der zugehörigen Antriebs-Druckfeder umfaßt sind. Ihre Länge ist konstruktionsbedingt auf die Höhe des Kassettengehäuses beschränkt, so daß sie nur einen Teil der ausgefahrenen Antriebs-Druckfeder abstützen können. Sie sind, je nach Konstruktion, entweder fahrzeugfest am Kassettenboden befestigt oder mit dem oberen Ende der Antriebs-Druckfeder über eine Druckscheibe verbunden, so daß sie im letzteren Fall zusammen mit dem Überrollbügel unter Abheben vom Kassettenboden mit ausfahren.

In der Praxis hat sich gezeigt, daß im Fahrbetrieb Schwirrgeräusche auftreten können, die mitunter als störend empfunden werden. Diese Schwirrgeräusche werden durch eine Wechselwirkung zwischen der Antriebs-Druckfeder und dem sie umgebenden, von dem jeweiligen Schenkelrohr des Überrollbügels umfaBten Standrohr erzeugt, da der Abstand zwischen der Umhüllenden der Antriebs-Druckfeder und dem Standrohr nicht gleichmäßig ist und zudem aus Platzgründen konstruktionsbedingt relativ klein ist.

Der Erfindung liegt daher die Aufgabe zugrunde, diese Schwirrgeräusche mit relativ einfachen Mitteln konstruktiv zu beseitigen.

Ausgehend von dem eingangs bezeichneten Überrollbügelsystem, mit
- einem fahrzeugfest anbringbaren kassettenartigen Gehäuse,
- einem im Gehäuse geführten Überrollkörper, der im Normalzustand gegen die Kraft von mindestens einer vorgespannten, von einem Rohr umgebenen Antriebs-Druckfeder durch eine Haltevorrichtung in einer unteren eingefahrenen Ruhelage haltbar ist, und unter Lösen der Haltevorrichtung durch die Federkraft der Antriebs-Druckfeder in eine obere, schützende, und dort verriegelbare Stellung bringbar ist, und
- einem Federführungsbolzen, der von der Antriebs-Druckfeder umfaßt ist,

gelingt die Lösung dieser Aufgabe erfindungsgemäß dadurch, daß an dem Federführungsbolzen mindestens ein Satz gespreizter Zentrierarme angebracht ist, die einen gleichmäßigen Abstand der Antriebs-Druckfeder zu dem sie umgebenden Rohr sichern.

Die gespreizten Zentrierarme bewirken eine konzentrische Führung der Antriebs-Druckfeder im sie umgebenden Rohr, sei es das Standrohr oder direkt das Schenkelrohr, und gewährleisten damit einen gleichmäßigen Abstand zwischen der Umhüllenden der Antriebs-Druckfeder und dem sie umgebenden Rohr. Dadurch können die Schwirrgeräusche mit Vorteil verhindert, zumindest signifikant gemindert werden.

Eine besonders wirksame Zentrierung läßt sich erzielen, wenn gemäß einer Ausgestaltung der Erfindung die gespreizten Zentrierarme elastisch nachgebend ausgebildet sind, sowie wenn die Zentrierarme auf gleicher Höhe des Federführungsbolzens in gleichen Abständen umlaufend angeordnet sind.

Einen gewichtsmäßig günstigen Aufbau des Federführungsbolzens läßt sich erzielen, wenn der Federführungsbolzen einen kreuzförmigen Querschnitt und einen spitz zulaufenden Kopf besitzt, wobei der so gestaltete Kopf ein Eindringen in andere, hohle Komponenten erleichtert.

Die Wirkverbindung der Antriebs-Druckfeder mit dem Federführungsbolzen und dem Überrollkörper läßt sich gemäß einer Weiterbildung der Erfindung konstruktiv dann vorteilhaft gestalten, wenn der Satz gespreizter Zentrierarme am einen Ende des Federführungsbolzens angebracht ist und eine Schulter für die Abstützung des einen Endes der Antriebs-Druckfeder besitzt, die mit ihrem anderen Ende in einem Federtopf zentriert gelagert ist, der wiederum mit einem Anschlag des Überrollkörpers in antreibender Wirkverbindung steht.

Für die Herstellung des Federführungsbolzens mit seinen Spreizarmen stehen dem Fachmann eine Reihe von Möglichkeiten offen. Eine besonders wirtschaftliche Lösung ist dann gegeben, wenn der Federführungsbolzen ein Kunststoff-Spritzgießteil ist, an dem die Zentrierarme einstückig angespritzt sind.

Alternativ dazu kann die Herstellung auch so getroffen sein, daß der Federführungsbolzen mit seinen Zentrierarmen mehrstückig aus Komponenten aufgebaut ist, vorzugsweise daß der Federführungsbolzen ein metallisches Strangpreßprofilteil ist, an dem ein die Zentrierarme bildendes, kegeliges Kunststoffteil eingesetzt ist.

Vorzugsweise findet der erfindungsgemäße Federführungsbolzen Anwendung bei einem Überrollkörper in Form eines U-förmigen Überrollbügels mit einem gebogenen Basisteil und zwei parallelen Schenkelrohren, bei dem im Bodenteil des Kassettengehäuses zwei Federführungsbolzen entsprechend der Bügelrohrbreite beabstandet verankert sind, die jeweils eine Antriebs-Druckfeder für das Ausfahren des Überrollbügels in seine obere, schützende Stellung aufnehmen, welche direkt von den Schenkelrohren des Überrollbügels umfaßt sind, unter Vorgabe eines gleichförmigen Abstandes durch die gespreizten Zentrierarme.

Diese Konstruktion erlaubt mit Vorteil das Weglassen von die Schenkelrohre führenden Standrohren.

Anhand eines in den Zeichnungen dargestellten Ausführungsbeispieles wird die Erfindung näher beschrieben.

Es zeigen:
- Figur 1: in einer isometrischen Darstellung den Gesamtaufbau eines Überrollbügelsystems, bei dem die Erfindung bevorzugt Anwendung findet, mit einem Kassettengehäuse, das U-förmige Seitenprofile aufweist, an denen ein Führungsblock für die Schenkelrohre eines U-förmigen Überrollbügels fest angebracht und in denen eine, die Schenkelrohre des Überrollbügels verbindende Traverse geführt ist,
- Fig. 2: in einer Längsschnitt-Darstellung den Federführungsbolzen der Konstruktion nach Fig. 1, in Verbindung mit der zugehörigen Antriebs-Druckfeder und dem Schenkelrohr des Überrollbügels,
- Fig. 3: in zwei Figurenteilen A, B ausschnittsweise in vergrößerten Darstellungen den Kopf- und den Fußteil des Federfühmngsbolzens mit Abstützung der Antriebs-Druckfeder an der Wurzel der Zentrierarme und in einem Federtopf, der in antreibender Wirkverbindung mit dem Schenkelrohr steht.

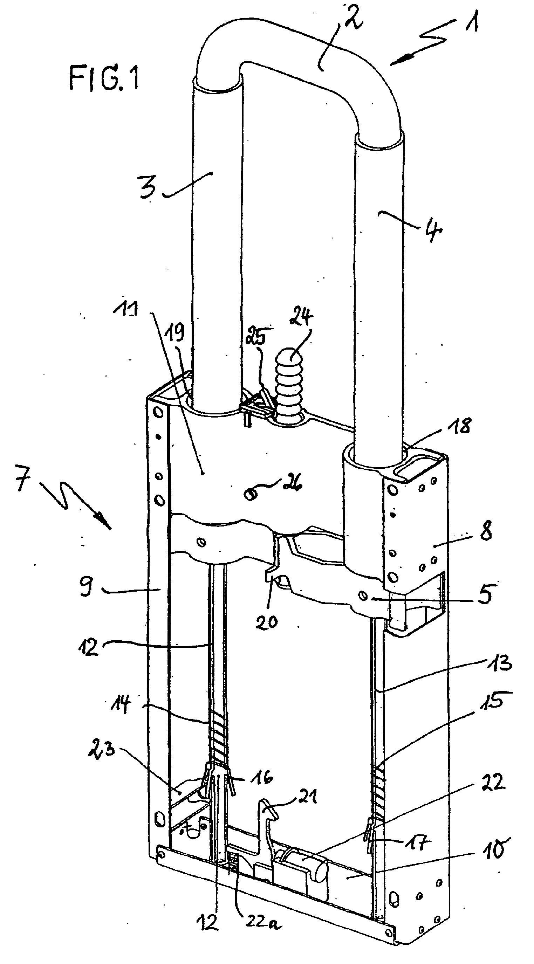

Die Figur 1 zeigt in einer isometrischen Darstellung den prinzipiellen Aufbau eines Überrollschutzsystems, wobei Teile weggebrochen sind, bei dem die erfindungsgemäß ausgebildeten Federführungsbolzen bevorzugt Anwendung finden. In Figur 1 ist dabei der ausgefahrene Zustand des Überrollkörpers dargestellt.

Dieses Überrollschutzsystem weist zunächst einen U-förmigen Überrollbügel 1 auf, welcher aus drei Rohren 2, 3, 4 zusammengesetzt ist. Dabei bildet den Basisschenkel des Überrollbügels 1 im wesentlichen ein gekrümmtes Rohr 2, welches an seinen Enden mit zwei Schenkelrohren 3, 4 durch Schweißen oder andere geeignete Verbindungsarten starr verbunden ist.

Außer zylindrischen Querschnitten für die Bügel-Schenkelmhre können aus Stabilitätsgründen auch ovale oder eckige Querschnitte gewählt werden.

Prinzipiell sind auch andere Formen eines Überrollkörpers einsetzbar, beispielsweise ein Überrollkörper, der aus einem einstückigen Profilkörper gebildet ist.

Die offenen Enden der Schenkelrohre 3, 4 sind mittels einer Traverse 5 miteinander starr verbunden. Zu diesem Zweck ist die Traverse 5 als Profilkörper mit vorgegebener Höhe ausgebildet, der Bohrungen 6 zur Aufnahme der Schenkelrohre 3, 4 aufweist, in denen sie befestigt sind.

Der Überrollbügel 1 ist mit seinen beiden Schenkelrohren 3, 4, die eine geschlossene Mantelfläche aufweisen, in einem kassettenartigen Gehäuse 7 aufgenommen und aus- bzw. einfahrbar darin gehaltert. Dieses Gehäuse weist zwei Seitenteile 8, 9 auf, die durch einen U-förmigen Profilkörper gebildet werden, die vorzugsweise aus Metall, insbesondere aus Stahl, bestehen. Diese Seitenprofile 8, 9 sind unten über ein Bodenblechteil 10 und oben über einen Führungsblock 11 miteinander verbunden, z.B. durch Nieten, Schrauben, Verschweißen oder dergleichen.

Im Bodenblech 10 sind zwei Federführungsbolzen 12, 13 verankert, auf denen vorspannbare Antriebs-Druckfedern 14, 15 zum Ausfahren des Überrollbügels 1 im Gefahrenfall bzw. bei Handauslösung aufgeschoben sind und die direkt von den Schenkelrohren 3, 4 umfaßt sind.

An den Federführungsbolzen 12, 13 ist erfindungsgemäß jeweils mindestens ein Satz gespreizter Zentrierarme 16, 17 angebracht, vorzugsweise einstückig angeformt, die einen gleichmäßigen Abstand zwischen der zugehörigen Druckfeder 14, 15 und dem zugeordneten Schenkelrohr 3, 4 sichern, was sich mit Vorteil geräuschmindernd auswirkt.

Es ist prinzipiell auch denkbar, die mit den gespreizten Zentrierarmen versehenen Federführungsbolzen 12, 13 mit ebenfalls im Bodenteil 10 verankerten Standrohren mit geschlossenen Mantelflächen zu umgeben, über die die Schenkelrohre, die Standrohre übergreifend, geführt sind.

Die beiden Seitenprofile 8, 9 sind zweckmäßig, zumindest auf einer Frontseite der Kassette, mit einem Deckblech verbunden, das sich zweckmäßig, aber nicht notwendigerweise, über die gesamte Kassettenhöhe erstreckt (nicht dargestellt).

Der Führungsblock 11 besitzt zwei Führungsbohrungen 18, 19, die die Mantelfläche der Schenkelrohre 3, 4 seitlich abstützen und eine sehr weit tolerierte Führung für die sich längs der Führungsbohrungen 18, 19 bewegenden Schenkelrohre 3, 4 bieten. Am oberen, dem gekrümmten Rohr 2 zugewandten Ende der Führungsbohrungen 18, 19 ist zweckmäßig eine radiale Ansenkung oder Ringnut angelegt, welche in bekannter Weise eine ringförmige, radial elastische Führungsbuchse aufnimmt (nicht dargestellt), wodurch das radiale Spiel der Bügel-Schenkelrohre 3, 4 in den Führungsbohrungen 18, 19 ausgeglichen wird. Zusätzlich ist für die Schenkelrohre noch eine innere Führung vorgesehen, die durch die erwähnten gehäusefesten Federführungsbolzen bzw. Standrohre gewährleistet ist.

Um den Überrollbügel 1 in seiner (nicht dargestellten) unteren Position, der Ruhelage, gegen die Kraft der dann vorgespannten Druckfedern 14, 15 halten zu können, ist an der Traverse 5 eine Haltenase 20 angebracht, vorzugsweise einstückig angeformt, die in Wirkeingriff mit einer im Bodenteil schwenkbar angelenkten, mittels einer Feder 22 a im Uhrzeigersinn vorgespannten Halteklinke 21 bringbar ist. Bei abgesenktem Überrollbügel 1, und damit auch bei abgesenkter Traverse 5, umfaßt die Halteklinke 21 die Haltenase 20 und hält den Überrollbügel in dieser Ruhelage. Ein Distanzstück 23, das jeweils in den Seitenprofilen 8, 9 befestigt ist, begrenzt dabei die Verschiebbarkeit der Traverse 5 nach unten und gibt somit die Ruhelage vor. Ferner wird durch das Distanzstück 23 beim Verschrauben der Kassette im Fahrzeug eine Deformation der Seitenprofile vermieden.

Am Bodenteil 10 ist weiterhin ein sensorgesteuertes Auslösesystem 22 fest angebracht, das vorzugsweise durch ein pyrotechnisches Auslöseelement gebildet, das sicherer als ein üblicher Auslösemagnet die relativ hohe Auflagekraft der Halteklinke 21 auf der Haltenase 20 überwinden kann.

Auf der Traverse 5 ist in an sich bekannter Weise ein Rastdorn 24 befestigt, der in der oberen Stellung mit einer Verriegelungsklinke 25, die im Führungsblock 11 um die Welle 26 schwenkbar angelenkt ist, verriegelnd in Wirkeingriff bringbar ist, um ein ungewolltes Eindrücken des Überrollbügels in einer ausgefahrenen Position zu verhindern. Diese Verriegelung wird in der eingangs zitierten DE 43 42 400 A1 näher beschrieben.

Es ist verständlich, daß die beschriebene Haltevorrichtung und Verriegelungseinrichtung nur, wenn auch sehr vorteilhafte, Ausführungsformen darstellen und daher auch andere Konstruktionen anwendbar sind.

Durch die dargestellte Ausbildung des Überrollschutzsystems wird jedoch die Führung des Überrollbügels signifikant verbessert und die Knicksteifigkeit des Systems signifikant erhöht.

Die fahrzeugfeste Befestigung des Kassetten-Gehäuses erfolgt vorzugsweise durch Befestigung des Bodenbleches 10 am Fahrzeugboden. Auch ist eine Befestigung am Sitzgestell möglich, wenn an den Seitenprofilen übliche, nach außen abgewinkelte Befestigungsleisten angebracht bzw. angeformt sind.

Das Kassettengehäuse muß nicht zwingend aus separaten Seitenprofilen 8, 9 zusammengesetzt sein. Es kann auch durch ein U-förmiges Profilteil mit dem Verbindungsschenkel als Deckblech und den U-Schenkeln als Seitenwände, die zusätzlich unter Bildung des Seitenprofiles am freien Ende abgekantet sind, gebildet werden.

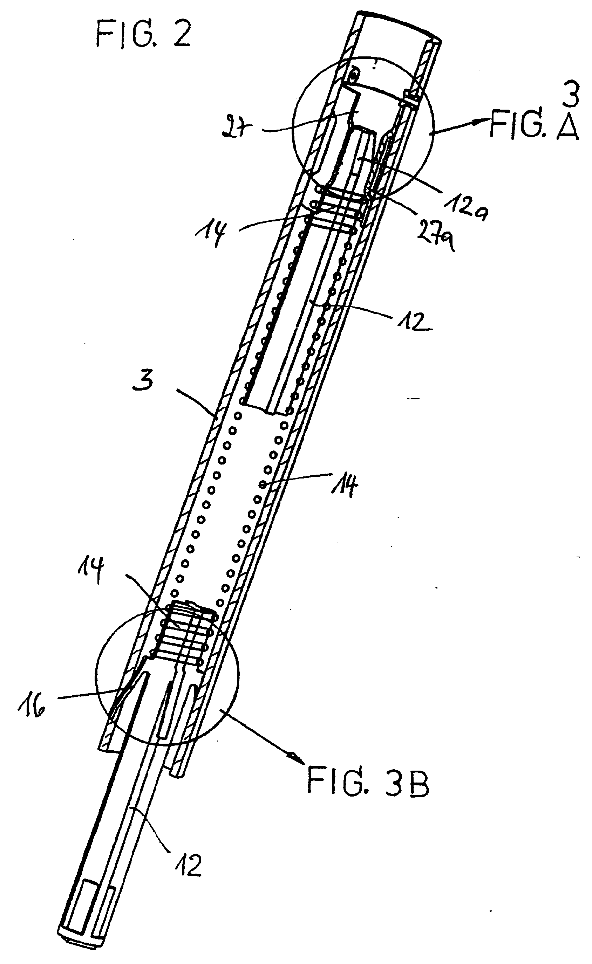

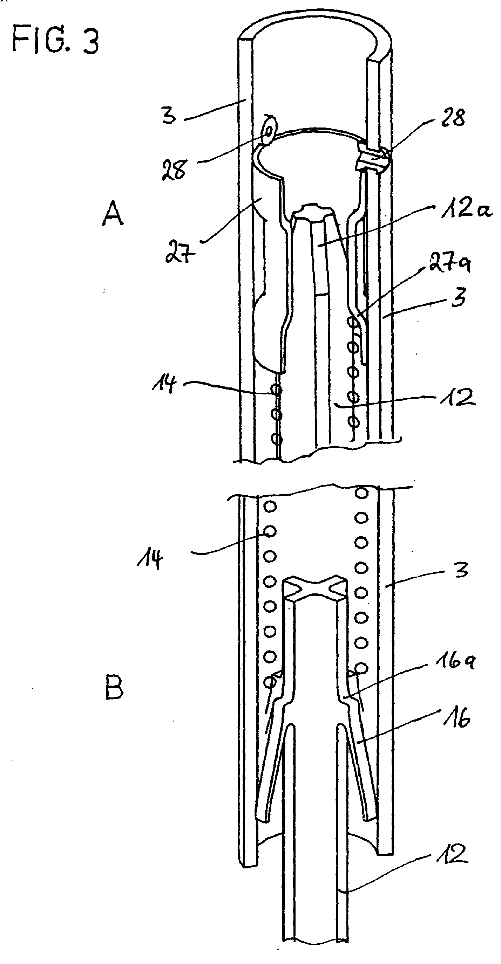

In den Figuren 2 und 3 ist der erfindungsgemäß ausgebildete Federführungsbolzen näher dargestellt, wobei bezogen auf Fig. 1 der linke Federführungsbolzen 12 mit der ihn umgebenden Antriebsfeder 14 und dem diese wiederum umgebenden Schenkelrohr 3 gezeigt ist. Der Federführungsbolzen 12 besitzt einen kreuzförmigen Querschnitt (Fig. 3 B) und ein spitz zulaufendes Kopfteil 12 a. Er weist ferner einen Satz gespreizter, elastisch nachgebender Zentrierarme 16 auf, die in regelmäßigen Abständen umlaufend angeordnet sind. An der Übergangsstelle zu dem langgestreckten Teil des Federführungsbolzens 12 ist ein Ansatz, eine Schulter 16 a ausgebildet, an dem sich das untere Ende der Antriebs-Druckfeder 14 abstützt.

Das obere Ende der Antriebs-Druckfeder 14 stützt sich in einem zylindrischen Federtopf 27 ab, der im Schenkelrohr 3 aufgenommen ist, und der einen sich im Durchmesser verjüngenden umlaufenden Randabschnitt 27 a besitzt, in dem das obere Ende der Antriebsfeder 14 zentriert gelagert ist.

Das Schenkelrohr 3 weist zwei gegenüberliegende Anschläge 28 als axialer Anschlag für den Federtopf 27 auf, der mit seinem oberen Rand aufgrund der Antriebs-Druckfeder 14 an diesen Anschlägen 28 anliegt.

Die Anschläge 28 können, wie dargestellt, durch Blindnieten gebildet sein. Sie können auch durch Prägungen im Schenkelrohr 3 oder vergleichende Mittel gebildet sein.

Wie die Figuren 2 und 3, die die untere Position des Überrollbügels mit gespannter Antriebs-Druckfeder zeigen, erkennen lassen, dient der Federtopf 27 einerseits der Zentrierung der Antriebs-Druckfeder 14, die im unteren Teil durch die Zentrierarme 16 zentriert wird sowie des Federführungsbolzens 12 und andererseits dem Wirkeingriff mit dem Schenkelrohr bei der Umsetzung der Federkraft in eine Aufstellbewegung des Überrollbügels. Wird nämlich die Haltevorrichtung 20, 21 (Fig. 1) ausgelöst, dann drückt die Antriebs-Druckfeder 14 über den Federtopf 27 und die Axialanschläge 28 das Schenkelrohr 3 und damit den Überrollbügel 1 nach oben, wobei der Federführungsbolzen 12 ortsfest verbleibt. Beim Wiedereinfahren des ausgelösten Überrollbügels 1 gewährleisten der glockenrandähnlich aufgewölbte Randabschnitt 27 a des Federtopfes 27 einerseits und das spitz zulaufende Ende 12 a des Federführungsbolzens andererseits, daß Letzterer wieder in dem Federtopf 27, wie in Fig. 2 bzw. 3 dargestellt, aufgenommen wird.

Der Federführungsbolzen 12 ist vorzugsweise ein Kunststoff-Spritzgießteil, an dem die flexiblen Spreizarme 16 einstückig angeformt sind. Er kann auch mehrstückig und auch aus verschiedenen Materialien aufgebaut sein, beispielsweise aus einer metallischen Stange aus einem Strangpreßprofil mit einem eingesetzten Kunststoffkegel als Spitze 12 und einem unteren Kunststoffsegment mit einem kegeligen geteilten Mantel zur Realisierung der flexiblen Spreizarme 16. Die verwendeten Materialien sollen gute Gleiteigenschaften besitzen, vorzugsweise selbstschmierend sein, wie z.B. der Kunststoff POM.

Wie insbesondere die Fig. 3 erkennen läßt, ist der Federtopf 27 vorzugsweise axial-symmetrisch aufgebaut, um einen falschen Einbau bei asymmetrischer Gestaltung zu vermeiden, d.h. der Randabschnitt 27 a ist an beiden Enden gleich ausgebildet und kann damit beidseitig die gleiche Funktion (Anschlag, Aufnahme der Druckfeder) ausüben.

Im Ausführungsbeispiel ist der Federführungsbolzen fest am Boden des Kassettengehäuses angebracht. Die Ausführung kann, wie im Fall der eingangs zitierten EP 0 623 492 B1, auch so getroffen sein, daß der Federführungsbolzen fest mit dem oberen Ende der Antriebs-Druckfeder verbunden ist, d.h. mit dieser ausfährt (fliegender Bolzen). Die Anordnung der Komponenten (Federtopf, Spreizarme) ist dann höhenverkehrt.

## Patentansprüche

1. Überrollschutzsystem, mit
- einem fahrzeugfest anbringbaren kassettenartigen Gehäuse (7),
- einem im Gehäuse (7) geführten Überrollkörper (1), der im Normalzustand gegen die Kraft von mindestens einer vorgespannten, von einem Rohr umgebenen Antriebs-Druckfeder (14, 15) durch eine Haltevorrichtung (20, 21) in einer unteren eingefahrenen Ruhelage haltbar ist, und unter Lösen der Haltevorrichtung durch die Federkraft der Antriebs-Druckfeder (14, 15) in eine obere, schützende, und dort verriegelbare Stellung bringbar ist, und
- einem Federführungsbolzen (12, 13), der von der Antriebs-Druckfeder umfaßt ist,
**dadurch gekennzeichnet, daß** an dem Federführungsbolzen (12, 13) mindestens ein Satz gespreizter Zentrierarme (16, 17) angebracht ist, die einen gleichmäßigen Abstand der Antriebs-Druckfeder (14, 15) zu dem sie umgebenden Rohr (3, 4) sichern.

2. Überrollschutzsystem nach Anspruch 1, **dadurch gekennzeichnet, daß** die gespreizten Zentrierarme (16, 17) elastisch nachgebend ausgebildet sind.

3. Überrollschutzsystem nach Anspruch 1 oder 2, **dadurch gekennzeichnet, daß** die Zentrierarme (16, 17) auf gleicher Höhe des Federführungsbolzens (12, 13) in gleichen Abständen umlaufend angeordnet sind.

4. Überrollschutzsystem nach einem der Ansprüche 1 bis 3, **dadurch gekennzeichnet, daß** der Federführungsbolzen (12, 13) einen kreuzfrömigen Querschnitt und einen spitz zulaufenden Kopf (12 a) besitzt.

5. Überrollschutzsystem nach einem der Ansprüche 1 bis 4, **dadurch gekennzeichnet, daß** der Satz gespreizter Zentrierarme (16, 17) am einen Ende des Federführungsbolzens (12, 13) angebracht ist und eine Schulter (16 a) für die Abstützung des einen Endes der Antriebs-Druckfeder (14, 15) besitzt, die mit ihrem anderen Ende in einem Federtopf (27) zentriert gelagert ist, der wiederum mit einem Anschlag (28) des Überrollkörpers (1) in antreibender Wirkverbindung steht.

6. Überrollschutzsystem nach einem der Ansprüche 1 bis 5, **dadurch gekennzeichnet, daß** der Federführungsbolzen (12, 13) ein Kunststoff-Spritzgießteil ist, an dem die Zentrierarme (16, 17) einstückig angespritzt sind.

7. Überrollschutzsystem nach einem der Ansprüche 1 bis 5, **dadurch gekennzeichnet, daß** der Federführungsbolzen (12, 13) mit seinen Zentrierarmen (16, 17) mehrstückig aus Komponenten aufgebaut ist.

8. Überrollschutzsystem nach Anspruch 7, **dadurch gekennzeichnet, daß** der Federführungsbolzen (12, 13) ein metallisches Strangpreßprofilteil ist, an dem ein die Zentrierarme bildendes, kegeliges Kunststoffteil eingesetzt ist.

9. Überrollschutzsystem nach einem der Ansprüche 1 bis 8, mit einem Überrollkörper in Form eines U-förmigen Überrollbügels (1) mit einem gebogenen Basisteil (2) und zwei parallelen Schenkelrohren (3, 4), **dadurch gekennzeichnet, daß** im Bodenteil (10) des Kassettengehäuses (7) zwei Federführungsbolzen (12, 13) entsprechend der Bügelrohrbreite beabstandet verankert sind, die jeweils eine Antriebs-Druckfeder (14, 15) für das Ausfahren des Überrollbügels (1) in seine obere, schützende Stellung aufnehmen, welche direkt von den Schenkelrohren (3, 4) des Überrollbügels (1) umfaßt sind, unter Vorgabe eines gleichförmigen Abstandes durch die gespreizten Zentrierarme (16, 17).

10. Überrollschutzsystem nach einem der Ansprüche 5 bis 9, **dadurch gekennzeichnet, daß** der Federtopf (27) so geformt ist, daß er sowohl für die Druckfeder (14) als auch für den Federführungsbolzen (12) eine Zentrierfunktion in dem ihn umgebenden Rohr (3, 4) gewährleistet.

11. Überrollschutzsystem nach Anspruch 10, **dadurch gekennzeichnet, daß** der Federlopf (27) rotationssymmetrisch ausgebildet ist und an beiden Stirnseiten einen gleich ausgebildeten, sich im Durchmesser verjüngenden Randabschnitt (27 a) besitzt.

12. Überrollschutzsystem nach Anspruch 10 oder 11, **dadurch gekennzeichnet, daß** der Federtopf (27) aus Metall oder Kunststoff hergestellt ist, die gute Gleiteigenschaften aufweisen, vorzugsweise selbstschmierend sind.

## Claims

1. Roll-over protection system having
- a casing-like housing (7) which can be fitted so as to be secured to a vehicle,
- a roll member (1) which is guided in the housing (7) and which, in the normal state, can be held in a lower retracted rest position by means of a holding device (20, 21) counter to the force of at least one biased drive compression spring (14, 15) surrounded by a tube, and which, by the holding device being released, can be brought by the resilient force of the drive compression spring (14, 15) into a protective upper position which can be locked at that location, and
- a spring guiding pin (12, 13) which is surrounded by the drive compression spring,
**characterised in that** there is fitted to the spring guiding pin (12, 13) at least one set of splayed centering arms (16, 17) which ensure a uniform spacing of the drive compression spring (14, 15) relative to the tube (3, 4) which surrounds it.

2. Roll-over protection system according to claim 1, **characterised in that** the splayed centering arms (16, 17) are constructed so as to be resiliently flexible.

3. Roll-over protection system according to claim 1 or 2, **characterised in that** the centering arms (16, 17) are arranged in a continuous manner with equal spacing at the same height of the spring guiding pin (12, 13).

4. Roll-over protection system according to any one of claims 1 to 3, **characterised in that** the spring guiding pin (12, 13) has a cross-shaped cross-section and a tapering head (12a).

5. Roll-over protection system according to any one of claims 1 to 4, **characterised in that** the set of splayed centering arms (16, 17) is fitted to one end of the spring guiding pin (12, 13) and has a shoulder (16a) for supporting one end of the drive compression spring (14, 15) which is supported so as to be centred, with the other end thereof, in a vessel-like resilient member (27) which in turn is operably connected in a driving manner to a stop (28) of the roll member (1).

6. Roll-over protection system according to any one of claims 1 to 5, **characterised in that** the spring guiding pin (12, 13) is an injection-moulded plastics component, on which the centering arms (16, 17) are injection-moulded in an integral manner.

7. Roll-over protection system according to any one of claims 1 to 5, **characterised in that** the spring guiding pin (12, 13) with the centering arms (16, 17) thereof is constructed in several parts from components.

8. Roll-over protection system according to claim 7, **characterised in that** the spring guiding pin (12, 13) is a metal extruded profile member on which a conical plastics component which forms the centering arms is inserted.

9. Roll-over protection system according to any one of claims 1 to 8, having a roll member in the form of a U-shaped roll bar (1) having a bent base portion (2) and two parallel tubular members (3, 4), **characterised in that**, in the base portion (10) of the casing housing (7), two spring guiding pins (12, 13) are anchored spaced apart in accordance with the width of the curved tubular member and each receive a drive compression spring (14, 15) for extending the roll bar (1) into the upper, protective position thereof, which drive compression springs are directly surrounded by the tubular members (3, 4) of the roll bar (1), with a uniform spacing being defined by the splayed centering arms (16, 17).

10. Roll-over protection system according to any one of claims 5 to 9, **characterised in that** the vessel-like resilient member (27) is formed in such a manner that it provides a centering function in the tube (3, 4) which surrounds it, both for the compression spring (14) and for the spring guiding pin (12).

11. Roll-over protection system according to claim 10, **characterised in that** the vessel-like resilient member (27) is constructed in a rotationally symmetrical manner and has, at both end faces, an edge portion (27a) which is constructed in an identical manner and which tapers in terms of diameter.

12. Roll-over protection system according to claim 10 or claim 11, **characterised in that** the vessel-like resilient member (27) is produced from metal or plastics material which has good frictional properties and which is preferably self-lubricating.

## Revendications

1. Système de protection au retournement, avec
- un boîtier (7) du genre caisson pouvant être installé fixement sur le véhicule,
- un corps (1) de protection au retournement qui est guidé dans le boîtier (7) et qui, dans l'état normal, peut être maintenu par un dispositif de retenue (20, 21) dans une position de repos rentrée inférieure à l'encontre de la force d'au moins un ressort (14, 15) précontraint de pression d'entraînement entouré par un tube, et qui, en libérant le dispositif de retenue, peut être amené par la force de ressort du ressort (14, 15) de pression d'entraînement dans une position supérieure de protection, et y être verrouillé, et
- un boulon (12, 13) de guidage de ressort, qui est entouré par le ressort de pression d'entraînement,
**caractérisé en ce qu'**au moins un jeu de bras de centrage écartés (16, 17) est installé sur le boulon (12, 13) de guidage de ressort, bras qui assurent une distance uniforme entre le ressort (14, 15) de pression d'entraînement et le tube (3, 4) qui l'entoure.

2. Système de protection au retournement selon la revendication 1, **caractérisé en ce que** les bras de centrage écartés (16, 17) sont conçus de manière à pouvoir céder élastiquement.

3. Système de protection au retournement selon la revendication 1 ou 2, **caractérisé en ce que** les bras de centrage (16, 17) sont disposés à la même hauteur du boulon (12, 13) de guidage de ressort, en l'entourant à la même distance.

4. Système de protection au retournement selon l'une quelconque des revendications 1 à 3, **caractérisé en ce que** le boulon (12, 13) de guidage de ressort possède une section cruciforme et une tête (12a) se terminant en pointe.

5. Système de protection au retournement selon l'une quelconque des revendications 1 à 4, **caractérisé en ce que** le jeu de bras de centrage écartés (16, 17) est installé à une extrémité du boulon (12, 13) de guidage de ressort et possède un épaulement (16a) pour le soutien de l'une des extrémités du ressort (14, 15) de pression d'entraînement qui, par son autre extrémité, est monté de manière centrée dans une cuvette de ressort (27) qui se trouve elle-même en liaison fonctionnelle d'entraînement avec une butée (28) du corps (1) de protection au retournement.

6. Système de protection au retournement selon l'une quelconque des revendications 1 à 5, **caractérisé en ce que** le boulon (12, 13) de guidage de ressort est une pièce moulée par injection de matière plastique, sur laquelle les bras de centrage (16, 17) sont moulés d'un seul tenant.

7. Système de protection au retournement selon l'une quelconque des revendications 1 à 5, **caractérisé en ce que** le boulon (12, 13) de guidage de ressort et ses bras de centrage (16, 17) sont réalisés en plusieurs pièces.

8. Système de protection au retournement selon la revendication 7, **caractérisé en ce que** le boulon (12, 13) de guidage de ressort est une pièce profilée métallique réalisée par extrusion, sur laquelle est montée une pièce conique en matière plastique formant les bras de centrage.

9. Système de protection au retournement selon l'une quelconque des revendications 1 à 8, avec un corps de protection au retournement sous la forme d'un arceau de sécurité (1) en U avec une partie de base cintrée (2) et deux branches tubulaires parallèles (3, 4), **caractérisé en ce que** deux boulons (12, 13) de guidage de ressort sont ancrés dans la partie de fond (10) du boîtier en caisson (7) à une distance correspondant à la largeur de l'arceau tubulaire et ils reçoivent chacun un ressort (14, 15) de pression d'entraînement pour le déploiement de l'arceau de sécurité (1) dans sa position supérieure de protection, les ressorts (14, 15) étant directement entourés par les branches tubulaires (3, 4) de l'arceau de sécurité (1) avec prescription d'une distance uniforme par les bras de centrage écartés (16, 17).

10. Système de protection au retournement selon l'une quelconque des revendications 5 à 9, **caractérisé en ce que** la cuvette de ressort (27) est d'une forme telle qu'elle assure une fonction de centrage dans le tube (3, 4) qui l'entoure tant pour le ressort de pression (14) que pour le boulon (12) de guidage de ressort.

11. Système de protection au retournement selon la revendication 10, **caractérisé en ce que** la cuvette de ressort (27) est réalisée à symétrie de révolution et possède, sur ses deux côtés frontaux, une partie de bord (27a) de configuration identique, de diamètre allant en se rétrécissant.

12. Système de protection au retournement selon la revendication 10 ou 11, **caractérisé en ce que** la cuvette de ressort (27) est réalisée en métal ou en matière plastique présentant de bonnes propriétés de glissement, de préférence à lubrification automatique.
